# FASCICULE DE BREVET EUROPEEN

(11) **EP 3 649 662 B1**
(45) Date de publication et mention de la délivrance du brevet: **27.03.2024**
(21) Numéro de dépôt: 18752562.1
(22) Date de dépôt: 06.07.2018
(51) Int. Cl.: H01G 11/06, H01G 11/36, H01G 11/46, H01G 11/86

(54) **PROCÉDÉ DE PRÉPARATION D'UNE ÉLECTRODE COMPRENANT UN SUPPORT, DES NANOTUBES DE CARBONE ALIGNÉS ET UN OXYDE MÉTALLIQUE DÉPOSÉ PAR VOIE RÉDUCTRICE, LADITE ÉLECTRODE ET SES UTILISATIONS**
VERFAHREN ZUR HERSTELLUNG EINER ELEKTRODE MIT EINEM SUBSTRAT, AUSGERICHTETEN KOHLENSTOFFNANORÖHREN UND EINEM DURCH REDUKTIVE ABSCHEIDUNG ABGESCHIEDENEN METALLOXID, ELEKTRODE UND VERWENDUNGEN DAVON
METHOD FOR PREPARING AN ELECTRODE COMPRISING A SUBSTRATE, ALIGNED CARBON NANOTUBES AND A METAL OXIDE DEPOSITED BY REDUCTIVE DEPOSITION, THE ELECTRODE AND USES THEREOF.

(30) Priorité: 07.07.2017 FR 1756472
(43) Date de publication de la demande: 13.05.2020
(73) Titulaire: Commissariat à l'Energie Atomique et aux Energies Alternatives, 75015 Paris (FR); Université de Tours, 37020 Tours Cedex 1 (FR)
(72) Inventeur: PINAULT, Mathieu, 94260 Fresnes (FR); GHAMOUSS, Fouad, 37300 Joues-Les-Tours (FR); TRAN VAN, François, 37230 Fondettes (FR); CHARON, Emeline, 75013 Paris (FR); PIBALEAU, Baptiste, 91600 Savigny Sur Orge (FR)
(74) Mandataire: Brevalex
(86) Numéro de dépôt international: PCT/FR2018/051706
(87) Numéro de publication internationale: WO 2019/008297

(56) Documents cités:
- WEI-DE ZHANG ET AL: "Fabrication of a vertically aligned carbon nanotube electrode and its modification by nanostructured MnO2 for supercapacitors", PURE & APPLIED CHEMISTRY, vol. 81, no. 12, 16 novembre 2009 (2009-11-16), XP055453654, GB ISSN: 0033-4545, DOI: 10.1351/PAC-CON-08-11-25
- MA ET AL: "Synthesis and characterization of manganese dioxide spontaneously coated on carbon nanotubes", CAR, ELSEVIER, OXFORD, GB, vol. 45, no. 2, 9 décembre 2006 (2006-12-09), pages 375-382, XP005800067, ISSN: 0008-6223, DOI: 10.1016/J.CARBON.2006.09.006

## Description

### DOMAINE TECHNIQUE

La présente invention appartient au domaine des dispositifs de stockage et de restitution d'énergie électrique et plus particulièrement au domaine des électrodes notamment utiles pour des supercondensateurs.

En effet, la présente invention concerne un procédé pour préparer une électrode présentant (i) un support métallique, (ii) des nanotubes de carbone verticalement alignés sur ledit support et (iii) un oxyde métallique déposé le long desdits nanotubes de carbone par voie réductrice.

La présente invention concerne également ladite électrode ainsi préparée et ses différentes utilisations et notamment dans un supercondensateur.

### ÉTAT DE LA TECHNIQUE ANTÉRIEURE

Pour permettre l'essor des énergies renouvelables et la réduction des émissions de gaz, le stockage de l'électricité est l'un des plus grands défis à relever. Parmi les nombreuses sources autonomes, les supercondensateurs, basés sur des cycles rapides de charge/décharge d'ions sur des surfaces carbonées, se situent entre les condensateurs et les batteries. Leur efficacité de stockage élevée (> 95%), leur sécurité, leur fiabilité et leur durée de vie en font de bons candidats pour compléter ou remplacer les solutions existantes telles que, par exemple, batteries électrochimiques, volants ou stockage magnétique.

Les supercondensateurs dont le marché est en plein essor possèdent deux électrodes i.e. une anode et une cathode qui sont isolées électriquement par un séparateur, un électrolyte étant disposé entre chaque électrode et le séparateur.

L'un des paramètres important pour un supercondensateur est la capacitance du système. Cette dernière dépend principalement de la corrélation entre les matériaux choisis pour les électrodes, du design de ces électrodes et de l'électrolyte.

Dans les supercondensateurs commerciaux, la surface des électrodes est composée de carbone activé. Ce dernier est un matériau poreux, conducteur électronique, stable électrochimiquement et fournissant une surface par unité de volume élevée i.e. supérieure à 500 m².g⁻¹. Toutefois, la porosité du carbone activé est difficilement contrôlable : elle dépend, d'une part, de la porosité de la matière première utilisée telle que de la matière organique végétale riche en carbone et, d'autre part, du procédé d'activation physique ou chimique mis en oeuvre. L'existence d'une porosité complexe et mal maîtrisée dans le carbone activé mais aussi l'existence de groupements fonctionnels indésirables à sa surface affectent la capacitance et les performances des supercondensateurs en carbone activé.

Dans ce contexte, l'utilisation de nanomatériaux bien organisés à l'échelle nanométrique tels que des nanotubes de carbone verticalement alignés (ou VACNT pour « Vertically Aligned Carbon NanoTubes ») est très prometteuse. Plusieurs matériaux d'électrode à base de VACNT ont démontré des capacitances spécifiques intéressantes, validant ainsi l'intérêt d'une telle configuration (alignement et espacement régulier des nanotubes dans le matériau) en termes de gain en énergie et surtout de puissance du supercondensateur. A noter que, dans le cadre des supercondensateurs, le support métallique sur lequel les VACNT sont préparés est utilisé comme collecteur de courant.

Pour accroître l'énergie stockée des VACNT, une des solutions consiste à les combiner avec des matériaux électroactifs déposés sur les VACNT tels que les polymères conducteurs électroniques (PCE) ou des oxydes métalliques. On parle alors de pseudocapacitance. Dans ce cas, l'énergie est stockée par deux processus simultanés : processus électrostatique et processus redox.

En ce qui concerne les matériaux d'électrodes à base de VACNT et d'oxyde métallique, l'oxyde de manganèse (MnO₂) est l'un des matériaux les plus prometteurs en raison de son faible coût, son abondance naturelle, son aspect respectueux de l'environnement et ses performances pseudocapacitives. Les performances électrochimiques du MnO₂ sont largement tributaires de ses propriétés morphologiques et de sa surface spécifique. En général, la structure chimique, la morphologie, la surface spécifique, la porosité, la conductivité électrique et le transport ionique dans les pores jouent un rôle crucial dans la détermination des performances électrochimiques de MnO₂.

Parmi les procédés utilisables pour déposer du MnO₂, on peut citer le dépôt électrochimique, le dépôt hydrothermal et la synthèse sol-gel mais aussi le dépôt par voie réductrice ou dépôt spontané par voie chimique. Dans cette dernière technique, la surface des VACNT joue le rôle de donneur d'électrons et donc le rôle de réducteur, ce qui induit une précipitation préférentielle du MnO₂ sur les VACNT. Dans cette technique, le dépôt spontané par voie chimique de MnO₂ sur les VACNT est généralement réalisé à une température supérieure ou égale à 70°C.

En effet, la demande de brevet CN 103346021 **[1]** décrit l'élaboration de condensateurs électrochimiques dans lesquels l'électrode positive est constituée d'un composite à base de tapis de nanotubes de carbone alignés qui peut être directement formé sur un substrat conducteur et d'oxyde de manganèse ou de polyaniline et l'électrode négative est constituée d'un tapis de nanotubes de carbone alignés qui peut être directement formé sur un substrat conducteur et de polypyrrole, les électrolytes étant des électrolytes non aqueux. Dans un des exemples présentés, les VACNT sont formés sur une mousse de nickel à 800°C avec du ferrocène/éthanol en présence d'argon/hydrogène. Puis, ces VACNT sont mis en contact avec une solution de permanganate de potassium (KMnO₄) chauffée à 70°C et, après 2 h de réaction, on trouve du MnO₂ déposé sur les VACNT en une quantité de 66% en poids par rapport au poids total du composite.

Li *et al,* 2015 **[2]** ont fait croître du MnO₂ de manière homogène sur l'ensemble de la surface de VACNT très courts (2-5 µm) et de gros diamètres (>100 nm) formés sur des tissus de fibres de carbone par PECVD (pour « Plasma-Enhanced Chemical Vapour Déposition ») à l'aide d'une solution de KMnO₄ en milieu aqueux en autoclave à 180°C pendant 30 min. Le composite ainsi obtenu a montré une capacitance spécifique de 235 F.g⁻¹ à 2 mV.s⁻¹ par rapport à la masse totale du composite et une capacitance de 188 F.g⁻¹ à 100 mV.s⁻¹. Le composite est par ailleurs stable au cyclage à 5 A.g⁻¹ jusqu'à 500 cycles de charge et décharge.

Lou *et al,* 2013 **[3]** rapportent l'élaboration d'électrodes de batterie au lithium à base de VACNT formés sur un film d'aluminium puis recouverts de MnO₂ par voie réductrice à partir de KMnO₄. La croissance des VACNT s'effectue sur pastilles d'aluminium (99,45%) par CVD (pour « Chemical Vapor Déposition ») à 640°C en présence de ferrocène et d'éthanol (0,05 M) sous argon/hydrogène pendant 30 min (60 µm, 2 µm/min, diamètre moyen 13 nm). Le dépôt de MnO₂ est réalisé par réduction spontanée du KMnO₄ selon un protocole issu des travaux de Ma *et al,* 2007 **[4].** Plus particulièrement, les VACNT sont immergés dans une solution aqueuse à 0,1 M de KMnO₄ à température ambiante pendant 1 h puis à 70°C pendant 3 h. Les auteurs démontrent un recouvrement homogène des VACNT par le MnO₂ et mesurent des capacitances de 308 mA.h.g⁻¹ à 0,1 C comparables à la capacitance théorique de 95 mA.h.g⁻¹ à 20 C et un maintien de la capacitance à 133 mA.h.g⁻¹ après 100 cycles à 1 C. Ils relient la baisse des performances (augmentation de la SEI pour « Solid Electrolyte Interphase ») à une dégradation progressive du dépôt par la présence d'eau résiduelle, effet qu'ils parviennent à limiter par des traitements des électrodes Al/VACNT/MnO₂ sous argon entre 200 et 300°C au détriment de la capacitance initiale.

Cependant, les inventeurs reproduisant le procédé tel que décrit par Lou *et al,* 2013 **[3]** se sont rendu compte qu'une croûte de MnO₂ se formait à la surface du tapis de VACNT (voir partie expérimentale ci-après point II.1.1). Une telle croûte agit comme une couche bloquante limitant l'accès à l'ensemble du volume des VACNT et affectant ainsi les performances en capacité de stockage et de puissance de l'électrode suite à l'augmentation de résistivité de l'ensemble constitué par les VACNT recouverts d'une couche de MnO₂.

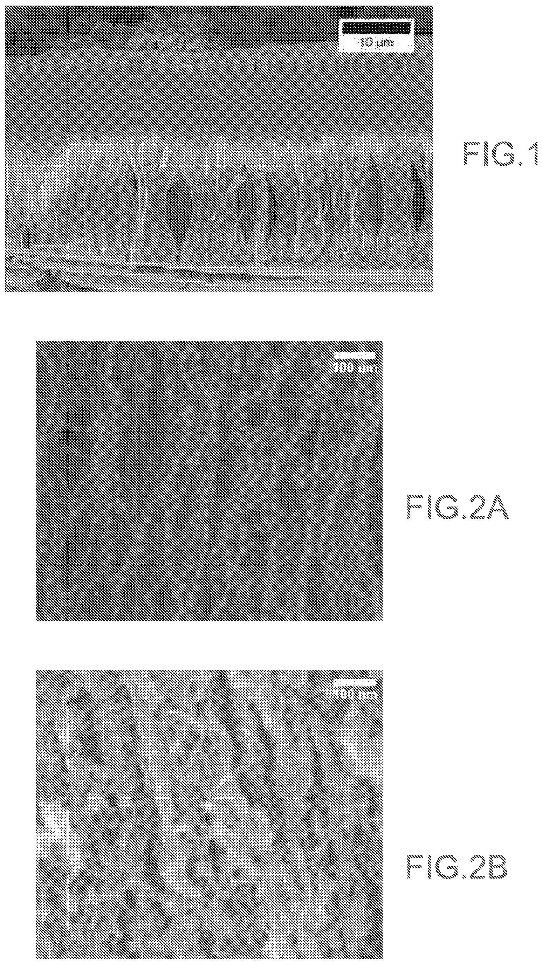

De plus, Zhang *et al,* 2009 **[5]** propose une électrode pour supercondensateur à base de VACNT formés sur un film de tantale puis recouverts d'une couche épaisse et poreuse de MnO2 par voie réductrice à partir de KMnO₄. Le procédé mis en oeuvre pour synthétiser les VACNT sur la feuille de tantale consiste en un procédé CVD avec, comme catalyseur, du cobalt et, comme source de carbone, de l'éthylènediamine. Dans ces conditions, les auteurs obtiennent un tapis de nanotubes de carbone azotés dits « bambous ». Le diamètre moyen de ces nanotubes est supérieur à 100 nm comme visible sur les Figures 1A et 1B. Le tapis de VACNT ainsi obtenu avec des nanotubes présentant un tel diamètre moyen ne peut être un tapis dense i.e. un tapis dans lequel la densité des nanotubes de carbone verticalement alignés s'étendant perpendiculairement au support métallique est supérieure ou égale à 10⁸ nanotubes.cm⁻². Pour le dépôt de MnO₂ sur ces nanotubes, ce dernier est obtenu en plaçant le film de tantale avec les VACNT, pendant 30 min, à température ambiante, dans une solution aqueuse comprenant 0,01 M de KMnO₄ et 10 M de HNO₃.

Cependant, les inventeurs reproduisant le procédé tel que décrit par Zhang *et al,* 2009 **[5]** se sont rendu compte qu'un tel procédé ne permettait pas d'obtenir un dépôt de MnO₂ le long des VACNT pour des tapis denses, alors que, dans les mêmes conditions mais en absence d'acide nitrique, un dépôt est obtenu (voir partie expérimentale ci-après point 11.1.2).

Du fait de l'intérêt grandissant des supercondensateurs, les inventeurs se sont fixés pour but de proposer un procédé industrialisable permettant d'obtenir une électrode notamment destinée à être utilisée dans un supercondensateur qui présente (i) un support métallique, (ii) des VACNT sur ledit support et (iii) un oxyde métallique déposé le long desdits VACNT de façon homogène.

### EXPOSÉ DE L'INVENTION

La présente invention permet de résoudre les problèmes techniques tels que précédemment définis et d'atteindre le but que se sont fixé les inventeurs.

En effet, les travaux des inventeurs ont permis de mettre au point un procédé industrialisable permettant d'obtenir une électrode avec un support métallique sur lequel des nanotubes de carbone sont verticalement alignés et revêtus d'un oxyde métallique tel que de l'oxyde de manganèse, ladite électrode présentant des performances en termes de capacitance intéressantes notamment pour une application dans un supercondensateur. Pour rappel, la capacitance est la propriété d'un conducteur électrique à contenir un certain niveau de charge électrique pour un potentiel électrique déterminé.

Plus particulièrement, la présente invention concerne un procédé pour la préparation d'une électrode comprenant un support métallique, des nanotubes de carbone verticalement alignés et un oxyde métallique déposé sur toute la longueur desdits nanotubes de carbone verticalement alignés, ledit procédé comprenant les étapes successives suivantes :
a) synthétiser, sur un support métallique, un tapis de nanotubes de carbone verticalement alignés dont la densité est comprise entre 10⁸ et 10¹³ nanotubes.cm⁻² de support ;
b) mettre en contact ledit tapis de nanotubes de carbone verticalement alignés synthétisés sur le support métallique lors de l'étape (a), avec une solution aqueuse comprenant un précurseur dudit oxyde métallique dont le potentiel redox est supérieur au potentiel relatif du tapis de nanotubes de carbone verticalement alignés synthétisés sur le support métallique,

ladite solution aqueuse comprenant le précurseur de l'oxyde métallique consistant en ledit précurseur dilué ou solubilisé dans de l'eau, aucun autre composé chimique différent dudit précurseur n'étant présent dans la solution mise en oeuvre lors de ladite étape (b),
la mise en contact étant exclusivement réalisée à une température inférieure ou égale à 40°C,
moyennant quoi une matrice en oxyde métallique est déposée sur toute la longueur desdits nanotubes de carbone verticalement alignés.

Les inventeurs ont associé, à la synthèse d'un tapis de VACNT sur un support métallique, un dépôt chimique d'oxyde métallique dans des conditions particulières permettant d'obtenir un dépôt dans l'épaisseur du tapis de VACNT et ce, sans formation de croûte d'oxyde métallique à la surface du tapis de VACNT. Les conditions particulières mises en oeuvre sont liées à une réduction spontanée du précurseur de l'oxyde métallique en présence des VACNT et ce, à une température inférieure ou égale à 40°C. De plus, cette technique de dépôt chimique n'est pas limitée à l'oxyde de manganèse et peut être généralisée à d'autres oxydes métalliques.

La présente invention s'applique à tout type de nanotubes de carbone verticalement alignés et ce quel que soit leur procédé de préparation. Ainsi, les nanotubes de carbone mis en oeuvre dans le cadre de la présente invention peuvent être des nanotubes à une seule couche de graphène (SWNT), des nanotubes à deux couches de graphène (DWNT), des nanotubes à plusieurs couches de graphène (MWNT) ou un de leurs mélanges.

L'étape (a) du procédé selon l'invention consiste à synthétiser, sur un support métallique, des nanotubes de carbone verticalement alignés et s'étendant perpendiculairement à la surface du support formant ainsi un tapis de nanotubes dont la base correspond au support.

Dans le cadre de la présente invention, le support métallique sur lequel les VACNT sont préparés est avantageusement un support en un matériau à base de titane, de nickel, d'aluminium, de cuivre, de chrome, de tantale, de platine, d'or, d'argent d'acier inoxydable, de silicium ou de carbone.

Par « matériau à base d'un métal donné », on entend aussi bien un matériau en ledit métal non allié qu'un matériau en un alliage comprenant ledit métal et au moins un autre élément et notamment au moins un autre élément métallique.

Il convient de noter que, pour minimiser le poids des électrodes et, par conséquent, le poids des supercondensateurs, des supports métalliques légers tels que des supports à base d'aluminium sont à privilégier. Par « matériau à base d'aluminium », on entend aussi bien un matériau en aluminium non allié qu'un matériau en un alliage d'aluminium tel qu'un alliage d'aluminium et de magnésium, un alliage d'aluminium et de manganèse, un alliage d'aluminium et de cuivre, un alliage d'aluminium et de silicium, un alliage d'aluminium, de magnésium et de silicium ou encore un alliage d'aluminium et de zinc.

Le support mis en oeuvre dans l'invention présente une forme quelconque i.e. une forme adaptée à l'utilisation ultérieure de l'électrode. A titre d'exemples illustratifs, ce support peut présenter une forme plane, une forme filaire (fil tissé, fil non tissé, fibre, ou grille), une forme de ruban, une forme cylindrique creuse ou encore une forme alvéolaire (mousse). Typiquement le support mis en oeuvre dans l'invention présente une épaisseur comprise entre 1 µm et 500 µm, notamment entre 2 µm et 200 µm, en particulier, entre 5 µm et 100 µm et, plus particulièrement, entre 10 µm et 75 µm.

L'homme du métier connaît différents procédés permettant de préparer des nanotubes verticalement alignés tels que précédemment définis, lesdits procédés étant utilisables dans l'étape (a) du procédé selon l'invention.

A titre d'exemples plus particuliers de procédés permettant de préparer des nanotubes de carbone verticalement alignés, on peut citer les procédés physiques basés sur la sublimation du carbone tels que des méthodes d'arc électrique, d'ablation laser ou utilisant un four solaire et les procédés chimiques tels que le procédé CVD ou consistant à pyrolyser des sources carbonées sur des catalyseurs métalliques. Un procédé particulièrement adapté à la préparation de NTC est la méthode de CVD-injection notamment décrite dans l'article de Pinault *et al,* 2005 **[6]** et l'article de Pinault *et al,* 2005 **[7].**

Dans un mode de réalisation particulier, le procédé de synthèse mis en oeuvre i.e. utilisant la technique de dépôt chimique en phase vapeur (ou CVD pour « Chemical Vapor Déposition ») à une température inférieure ou égale à 650°C est notamment le procédé décrit dans **[8-11].** Comme ces techniques sont réalisables par lots (technique dite en anglais « batch-to-batch »)/en défilé continu (technique dite en anglais « roll to roll »), elles sont facilement industrialisables.

Brièvement, cette synthèse se fait en présence d'une source catalytique et d'une source de carbone. La source catalytique peut être pré-déposée sur le support ou, au contraire, être co-injectée avec la source de carbone. La source catalytique est notamment choisie parmi les métallocènes de métal de transition comme, par exemple, le ferrocène, le nickelocène, le cobaltocène ou l'un quelconque de leurs mélanges. La source carbonée qui peut être liquide, solide ou gazeuse est notamment choisie parmi les hydrocarbures, les alcools, le monoxyde de carbone, les halogénures de carbone, le toluène, le cyclohexane, les huiles d'origine végétale, la benzylamine, l'acétonitrile, l'éthylène, l'acétylène, le xylène, le méthane et l'un quelconque de leurs mélanges. Dans un mode de réalisation particulier de cette synthèse, le ferrocène est véhiculé dans le réacteur à l'aide d'une solution de toluène mise sous forme d'aérosol.

Dans ce mode de réalisation particulier de l'étape (a) du procédé selon l'invention, cette synthèse est avantageusement réalisée à une température comprise entre 500°C et 620°C. De même, cette synthèse est typiquement réalisée à une pression comprise entre 10³ Pa et 10⁵ Pa et, en particulier, entre 0,9.10⁵ Pa et 10⁵ Pa.

En fonction du protocole particulier utilisé pour la synthèse des nanotubes de carbone lors de l'étape (a) du procédé, la densité des nanotubes de carbone verticalement alignés s'étendant perpendiculairement au support métallique peut être variable. Il est possible d'obtenir une densité comprise entre 10⁶ et 10¹³ nanotubes.cm⁻² de support. Dans le cadre de la présente invention, un matériau présentant un tapis dense de nanotubes de carbone verticalement alignés est mis en oeuvre, avec de l'ordre de 10⁸ à 10¹³ nanotubes.cm⁻², notamment avec de l'ordre de 10⁸ à 10¹² nanotubes.cm⁻² et, en particulier, de l'ordre de 10¹¹ à 10¹² nanotubes.cm⁻².

Suite à la synthèse des nanotubes de carbone verticalement alignés et préalablement à l'étape (b), les nanotubes de carbone verticalement alignés peuvent être soumis à un traitement (ou pré-traitement) oxydant i.e. visant à oxyder la surface des nanotubes mis en oeuvre et/ou à préparer la surface à une future oxydation par formation de radicaux. Une oxydation modifie la surface des nanotubes notamment en fixant et/ou en introduisant, sur les extrémités ou défauts des nanotubes, des groupements riches en oxygène tels que des groupements de type carboxylique (-COOH), hydroxyle (-OH), alcoxyle (-OX avec X représentant un groupe alkyle, un groupe acyle ou un groupe aroyle), carbonyle (-C=O), percarbonique (-C-O-OH) et parfois amide (-CONH).

Un tel traitement oxydant repose sur deux grands types de modifications de surface fondés sur :
- des traitements physiques tels qu'un traitement par plasma notamment d'oxygène, un traitement aux UV, un traitement aux rayons X ou γ, un traitement par irradiation aux électrons et aux ions lourds ou
- des traitements chimiques tels qu'un traitement à la potasse alcoolique, un traitement par un acide fort (HCl, H₂SO₄, HNO₃, HClO₄), un traitement à la soude, un traitement par un oxydant fort (KMnO₄, K₂Cr₂O₇, KClO₃ ou Crûs dans l'acide chlorhydrique, l'acide sulfurique ou dans l'acide nitrique), un traitement à l'ozone et un traitement thermique sous atmosphère oxygénée (O₂, H₂O,...).

De tels nanotubes, une fois ce traitement oxydant mis en oeuvre, peuvent se présenter sous forme de nanotubes modifiés en surface comme, par exemple, des nanotubes chargés négativement.

L'étape (b) du procédé selon la présente invention consiste à appliquer, de façon chimique, sur le tapis de nanotubes de carbone synthétisés lors de l'étape (a) sur le support métallique, une matrice en oxyde métallique.

Par « matrice en oxyde métallique », on entend, dans le cadre de la présente invention, une structure se présentant sous forme d'un film (ou gaine), poreux ou non poreux, à la surface des nanotubes de carbone mis en oeuvre dans le procédé de l'invention et essentiellement constituée d'un oxyde métallique. Dans le tapis de nanotubes de carbone tels qu'obtenus suite à l'étape (a) du procédé, la matrice est associée aux nanotubes de carbone en étant déposée sur toute la longueur des VACNT ou sur toute la hauteur du tapis, c'est-à-dire sur et au niveau de la surface latérale des nanotubes de carbone pouvant avantageusement former une gaine autour des nanotubes ainsi que dans l'espace entre les nanotubes. Typiquement, avantageusement, l'épaisseur de cette gaine est homogène pour un nanotube de carbone et, de façon plus avantageuse, elle est homogène pour l'ensemble des nanotubes de carbone du tapis.

Par « oxyde métallique », on entend, dans le cadre de la présente invention, tout oxyde métallique typiquement utilisé pour revêtir des nanotubes de carbone et notamment des nanotubes de carbone verticalement alignés. Typiquement, l'oxyde métallique mis en oeuvre dans le cadre de la présente invention est un oxyde d'au moins un métal tel que notamment au moins un métal de transition. Avantageusement, l'oxyde métallique mis en oeuvre dans le cadre de la présente invention est choisi dans le groupe constitué par un oxyde de ruthénium (RuO₂ ou RuO₄), un oxyde de titane (TiO₂), un oxyde de manganèse (MnO, Mn₃O₄, Mn₂O₃ ou MnO₂), un oxyde de cuivre (Cu₂O), un oxyde de nickel (NiO₂ ou Ni₂O₃), un oxyde de cobalt (Co₂O₃ ou Co₃O₄), un oxyde de fer (Fe₂O₃ ou Fe₃O₄), un oxyde de chrome (CrO₂, CrO₃ ou Cr₂O₃), un oxyde de vanadium (VO₂, V₂O₃ ou V₂O₅), et un de leurs mélanges. Par « mélange », on entend, par exemple, un oxyde choisi dans le groupe constitué par CuNiO, NiCo₂O₄, CoO-RuO₂, CuO-RuO₂, Fe₂O₃-RuO₂, NiO-RuO₂ et CuNiO-RuO₂.

En fonction de l'oxyde métallique à déposer sur les VACNT par voie chimique via une réduction spontanée, l'homme du métier saura déterminer, sans effort inventif, le précurseur dudit oxyde métallique à mettre en oeuvre. Comme précédemment indiqué, le précurseur mis en oeuvre doit présenter un potentiel redox supérieur au potentiel relatif du tapis de nanotubes de carbone verticalement alignés synthétisés sur le support métallique et ce, dans les conditions de la mise en contact lors de l'étape (b). Ainsi, le précurseur est susceptible d'être réduit par les nanotubes de carbone verticalement alignés synthétisés sur le support métallique.

A titre d'exemples illustratifs et non limitatifs de tels précurseurs, on peut citer un sel de perruthenate comme du perruthenate de sodium ou du perruthenate de potassium ; un sel de pertitanate comme du pertitanate de sodium ou du pertitanate de potassium ; un sel de permanganate comme du permanganate de sodium ou du permanganate de potassium ; un sel de perferrate comme du perferrate de sodium ou du perferrate de potassium ; un sel de perchromate comme du perchromate de sodium ou du perchromate de potassium ; un sel de pervanadate comme du pervanadate de sodium ou du pervanadate de potassium ;ou un de leurs mélanges.

Avantageusement, le précurseur de l'oxyde métallique est présent dans la solution aqueuse en une quantité comprise entre 1 mM à 500 mM, notamment entre 2 mM et 100 mM, en particulier, entre 4 mM et 50 mM et, plus particulièrement, de l'ordre de 10 mM (i.e. 10 mM ± 5 mM). Typiquement, la solution aqueuse comprenant le précurseur de l'oxyde métallique ne contient aucun autre réducteur que les VACNT tel qu'un acide ou un autre réducteur comme le MnSO₄. La solution aqueuse comprenant le précurseur de l'oxyde métallique consiste en ledit précurseur dilué ou solubilisé dans de l'eau, aucun autre composé chimique différent dudit précurseur n'étant présent dans la solution mise en oeuvre lors de l'étape (b) du procédé selon l'invention, ce qui exclut le procédé décrit par Zhang *et al,* 2009 **[5].**

Dans le cadre de l'étape (b) du procédé selon l'invention, le dépôt chimique de la matrice en oxyde métallique est réalisé de façon spontanée. En d'autres termes, aucune activation particulière telle que de la chaleur, l'application d'une énergie mécanique ou l'application d'une énergie électrique ne doit être mise en oeuvre afin d'obtenir ledit dépôt. Typiquement, lors de l'étape (b) du procédé selon l'invention, la mise en contact entre les VACNT et la solution aqueuse comprenant le précurseur de l'oxyde métallique est exclusivement réalisée à une température inférieure ou égale à 40°C. Ainsi, tant que les VACNT sont en présence de la solution aqueuse comprenant le précurseur de l'oxyde métallique, la température est inférieure ou égale à 40°C, ce qui exclut le procédé décrit par Lou *et al,* 2013 **[3].** Avantageusement, la température inférieure ou égale à 40°C mise en oeuvre lors de l'étape (b) est la température ambiante (i.e. 22°C ± 5°C).

Suite à l'étape (b), le procédé selon l'invention peut présenter une étape de rinçage et éventuellement une étape de séchage
L'étape de rinçage a, pour but principal, de nettoyer, de retirer les résidus/impuretés du type précurseurs d'oxyde métallique qui resteraient sur des parties du support, des nanotubes de carbone ou de la matrice d'oxyde métallique et qui n'auraient pas été déposés. De tels résidus/impuretés pourraient engendrer des problèmes lors de l'étape d'encapsulation et des dysfonctionnements du supercondensateur. Avantageusement, l'étape de rinçage est réalisée en faisant tremper le support métallique doté des nanotubes de carbone et de la matrice d'oxyde métallique dans de l'eau et/ou de l'éthanol. Le rinçage consiste à faire tremper le support métallique doté des nanotubes de carbone et de la matrice d'oxyde métallique dans de l'eau et/ou dans de l'éthanol pendant un temps variable de 1 à 30 min et en renouvelant l'opération avec le même solvant ou un solvant différent, si besoin jusqu'à cinq fois par exemple.

De plus, l'étape optionnelle de séchage du support métallique doté des nanotubes de carbone et de la matrice d'oxyde métallique peut être réalisée en laissant ce dernier, une fois rincé à l'eau et/ou à l'éthanol, à l'air libre afin que l'eau et/ou l'éthanol utilisés pour le rinçage s'évapore(nt). En variante, le support métallique doté des nanotubes de carbone et de la matrice d'oxyde métallique, une fois rincé, peut être séché en le chauffant, dans une étuve sous vide entre 50°C et 200°C et notamment à une température de l'ordre de 80°C (80°C ± 10°C), ou au moyen d'une lampe infrarouge, pendant une durée comprise entre 12 h et 36 h et notamment de l'ordre de 24 h (24 h ± 6 h). Cette variante peut être mise en oeuvre dans le cas d'un procédé en continu.

La présente invention concerne également une électrode susceptible d'être préparée par le procédé selon l'invention tel que précédemment défini. Cette électrode présente un support métallique doté des nanotubes de carbone et de la matrice d'oxyde métallique. Il s'agit donc d'une électrode monocouche.

Tout ce qui a été précédemment indiqué sur le support métallique s'applique également à l'électrode selon la présente invention.

Avantageusement, la densité des nanotubes de carbone verticalement alignés, dans l'électrode selon la présente invention peut être variable. Cette dernière est comprise entre 10¹¹ et 10¹² nanotubes.cm⁻² d'électrode.

Le pourcentage en masse de la matrice d'oxyde métallique exprimée par rapport à la masse totale du composite comprenant les nanotubes de carbone et cette matrice est compris entre 20% et 80%. A titre d'exemples particuliers illustratifs, ce pourcentage massique en oxyde par rapport à la masse totale du composite comprenant les nanotubes de carbone et cette matrice peut être de l'ordre de 60% (i.e. 60% ± 5%) ou de l'ordre de 70% (i.e. 70% ± 5%).

Dans l'électrode selon l'invention, les nanotubes de carbone présentent avantageusement une longueur supérieure à 10 µm. Dans certains modes de réalisation, cette longueur peut être supérieure à 20 µm, voire supérieure à 30 µm ou à 50 µm.

Enfin, l'électrode selon l'invention possède avantageusement une capacitance d'au moins 185 mF/cm² ou d'au moins 185 F.g⁻¹ par masse totale de composite.

La présente invention concerne aussi l'utilisation d'une telle électrode ou susceptible d'être préparée par le procédé de l'invention comme électrode positive/négative d'un dispositif de stockage et de restitution de l'électricité tel qu'un supercondensateur ou une batterie, comme électrode pour dispositif photovoltaïque, dans les matériaux pour le stockage du CO₂ ou comme électrode pour capteurs électrochimiques. Ainsi, la présente invention concerne un dispositif comprenant une électrode selon la présente invention ou susceptible d'être préparée par le procédé de l'invention, ledit dispositif étant choisi dans le groupe constitué par un dispositif de stockage et de restitution de l'électricité tel qu'un supercondensateur ou une batterie ; un dispositif photovoltaïque ; un matériau pour le stockage du CO₂ et un capteur électrochimique.

Dans un mode de réalisation particulier, un dispositif de stockage et de restitution de l'électricité selon l'invention comprend au moins deux électrodes monocouche (positive et négative) ou bien au moins trois électrodes dont deux électrodes monocouches (positives) et une électrode double couche (négative). Pour rappel, une électrode monocouche ne comporte qu'une seule surface active, tandis qu'une électrode double couche comporte deux surfaces actives respectivement sur ses deux faces opposées.

D'autres caractéristiques et avantages de la présente invention apparaîtront encore à l'homme du métier à la lecture des exemples ci-après donnés à titre illustratif et non limitatif, en référence aux figures annexées.

### BRÈVE DESCRIPTION DES DESSINS

La Figure 1 présente une micrographie en MEB après dépôt par réduction spontanée du KMnO₄ sur les VACNT dans les conditions Lou *et al,* 2013 [3].
La Figure 2 présente des micrographies en MEB après dépôt par réduction spontanée du KMnO₄ sur les VACNT dans les conditions de Zhang *et al,* 2009 [5] (Figure 2A) et dans les conditions Zhang *et al,* 2009 [5] mais en absence de 10 M de HNO₃ (Figure 2B).
La Figure 3 présente des micrographies en MEB avant (Figure 3A) et après (Figure 3B) dépôt par réduction spontanée du KMnO₄ sur les VACNT. Micrographies prises au centre du tapis de 20 µm.
La Figure 4 présente des micrographies en MEB après dépôt par réduction spontanée du KMnO₄ sur les VACNT en haut (Figure 4A), au milieu (Figure 4B) et en bas (Figure 4C) du tapis de VACNT.

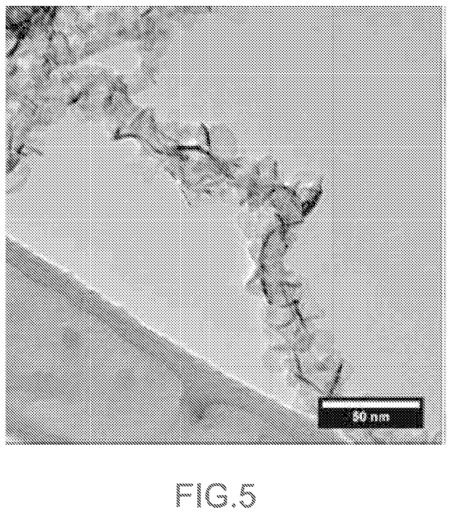

La Figure 5 présente une micrographie en MET d'un nanotube de carbone après dépôt par réduction spontanée du KMnO₄.

### EXPOSÉ DÉTAILLÉ DE MODES DE RÉALISATION PARTICULIERS

### I. Préparation des VACNT

### 1.1. Procédé de croissance sur acier inoxydable

Le procédé de CVD injection permet la croissance efficace et reproductible de VACNT sur des substrats en acier inoxydable 316L sous forme de pastilles présentant une épaisseur comprise entre 50 et 500 µm et un diamètre compris entre 8 et 16 mm.

Pour cela, le procédé nécessite le dépôt initial d'une sous-couche de céramique (à base de SiOx) obtenue à partir de toluène et d'orthosilicate de tétraéthyle (TEOS), à la surface du substrat avant l'étape de croissance de nanotubes. Différentes durées d'injection ont ainsi été testées dans le but de déposer une sous-couche céramique à la fois suffisamment épaisse pour remplir son rôle de barrière de diffusion pour les particules métalliques et suffisamment fine pour ne pas faire augmenter la résistance électrique des électrodes. La nature de l'atmosphère de réaction permet de jouer sur le diamètre et la densité en nanotubes de carbone des tapis formés sur le support métallique. La demande internationale WO 2009/103925 décrit notamment un tel procédé **[12].**

Les VACNT de faible densité sur inox sont obtenus à 800 ou 850°C à partir d'une solution Toluène/ferrocène (2,5% en masse) injectée sous argon uniquement. La durée de synthèse Toluène/ferrocène est fonction de l'épaisseur de tapis souhaitée, typiquement de 3 à 5 min pour 100 µm.

Les VACNT de forte densité sur inox sont obtenus à partir de la même solution Toluène/ferrocène mais avec une atmosphère de réaction à base d'argon/hydrogène et d'acétylène et ce, pour une température variant entre 600 et 800°C.

Ainsi, le dépôt d'oxyde métallique (MnO₂) a été réalisé sur des tapis de VACNT sur inox (15 à 200 µm longueur et 10-40 nm diamètre externe moyen contrôlés par microscopie électronique à balayage (MEB) et microscopie électronique en transmission (MET). Les densités surfaciques mesurées se trouvent dans la gamme 1 à 5×10⁹ VACNT/cm² pour des VACNT de diamètre moyen de 40 nm (faible densité) et dans la gamme 1 à 5×10¹¹ VANTC/cm² pour des VACNT de diamètre moyen de 10 nm (forte densité).

### I.2. Procédé de croissance sur aluminium

Concernant la croissance CVD directe de VACNT sur aluminium, l'abaissement de la température de croissance des tapis de NTC alignés (580 à 615°C suivant les atmosphères de réaction) est possible grâce notamment à l'emploi d'une source gazeuse de carbone (C₂H₂) en présence d'hydrogène et du précurseur métallique ferrocène.

Pour les fortes densités sur aluminium, on travaille autour de 600°C avec une solution Toluène/ferrocène à 10% et un mélange d'argon/hydrogène et d'acétylène. La durée de synthèse Toluène/ferrocène est également fonction de l'épaisseur de tapis souhaitée, typiquement 20 ou 50 min pour atteindre 100 µm.

La demande internationale WO 2015/071408 décrit notamment de tels procédés **[8].**

Malgré des vitesses de croissance de NTC plus faibles qu'à plus hautes températures (<10 µm.min⁻¹ à 580°C), il est possible de réaliser des électrodes VACNT/AI sans prétraitement de la surface de l'aluminium (brut ou alliage). Les caractéristiques (longueur contrôlable de 10 à 100 µm, diamètre externe moyen: 6-12 nm) sont au niveau de l'état de la technique. Les densités surfaciques mesurées sont très supérieures à celles obtenues sur inox sans acétylène : dans la gamme 1 à 5×10¹¹ NTC/cm².

### II. Dépôt d'oxyde de manganèse sur les VACNT par voie réductrice

### II.1. Procédés de l'art antérieur

### II.1.1 Lou et al, 2013 [3]

En reprenant les conditions décrites dans les travaux de Lou *et al,* 2013 **[3]** telles que décrites dans la partie « Etat de la technique » ci-dessus, une croûte d'oxyde de manganèse se forme à la surface du tapis de VACNT (Figure 1).

### II.1.2 Zhang et al, 2009 [5]

En reprenant les conditions décrites dans les travaux de Zhang *et al,* 2009 **[5]** telles que décrites dans la partie « Etat de la technique » ci-dessus et en les appliquant à un tapis dense de nanotubes de carbone i.e. un tapis de nanotubes de carbone verticalement alignés dont la densité est supérieure ou égale à 10⁸ nanotubes par cm² de support, aucun dépôt de MnO₂ n'est observé (Figure 2A). Cette absence de dépôt est confirmée par l'absence, avant et après l'étape de dépôt, d'augmentation de la capacitance et une variation de masse du composite très faible.

Par contre, en supprimant l'acide nitrique de la solution décrite dans Zhang *et al,* 2009 **[5]** et en ne modifiant pas les autres conditions opératoires, un dépôt de MnOz est clairement visible sur un tapis dense de nanotubes de carbone (Figure 2B).

### II.2. Procédé selon la présente invention

Les VACNT sur inox ou sur aluminium sont mis en contact, à 20°C, pendant 2 h avec une solution aqueuse de KMnO₄ à 10 mM. Le support métallique doté des nanotubes de carbone et de la matrice d'oxyde métallique est rincé à l'eau puis à l'éthanol et ensuite séché à l'étuve sous vide à 80°C durant 24h.

Lors de la mise en contact, une réaction de réduction spontanée a alors lieu à la surface des VACNT et un oxyde de manganèse s'y dépose.

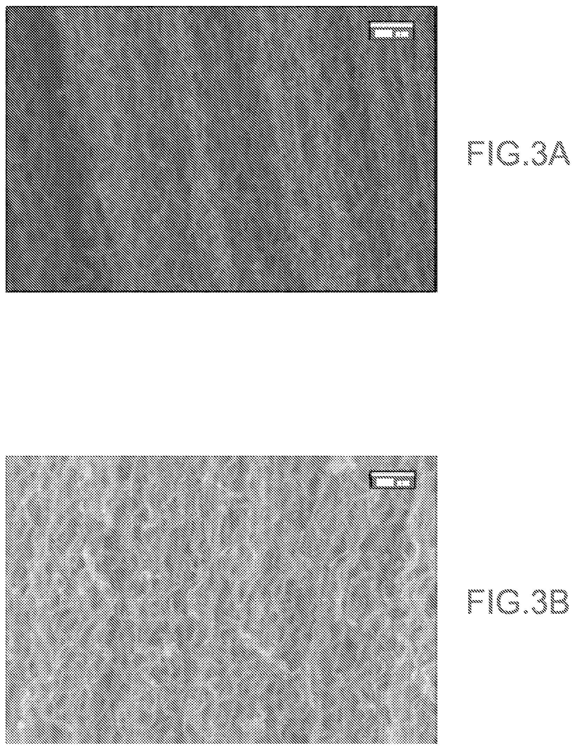

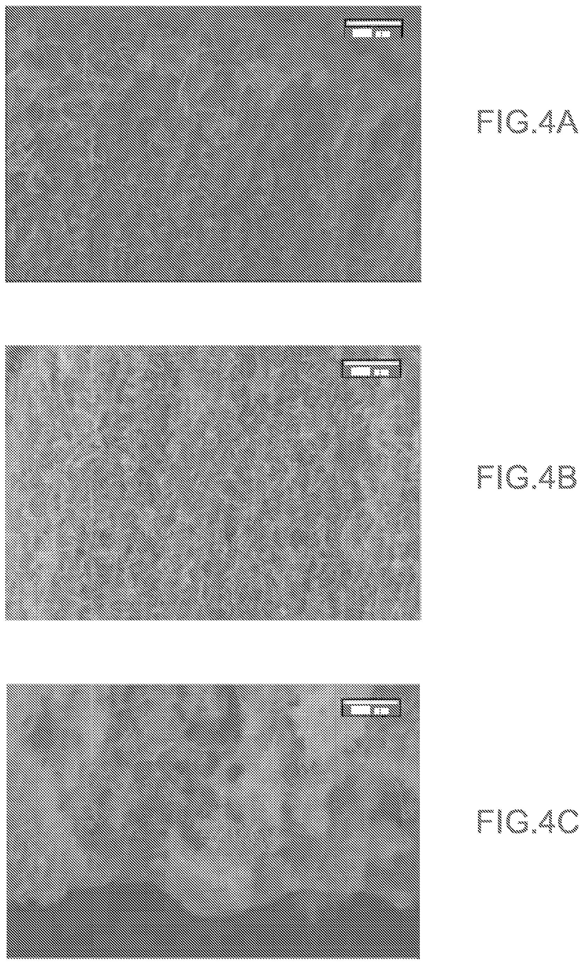

Des analyses MEB (Figures 3 et 4) et MET (Figure 4 5) montrent que l'association entre l'oxyde métallique et les VACNT est homogène sur l'ensemble de l'épaisseur du tapis (de 20 µm dans cet exemple de réalisation).

Afin de caractériser la capacitance par unité de surface de l'électrode selon l'invention et la comparer à celle de la même électrode (même support doté des nanotubes de carbone et même surface spécifique) mais sans dépôt d'oxyde métallique, la technique de voltammétrie cyclique a été utilisée en imposant une tension entre 0 et 0,8 V vs ECS à une vitesse de balayage de 5 mV/s pendant 5 cycles, dans un électrolyte aqueux (LiNO3 à 0,5M).

La caractérisation de la capacitance fournit une capacitance de 185 F/g et de 185 mF/cm² pour l'électrode selon l'invention (support en aluminium doté de nanotubes de carbone de forte densité, de 30 à 50 µm et fonctionnalisés par du MnO₂, tandis que la capacitance de l'électrode comparative sans oxyde métallique est comprise entre 30 et 40 F/g (15 mF/cm²).

L'électrode selon l'invention présente donc une valeur 5 fois plus grande que pour les VACNT nus en termes de capacitance gravimétrique et 10 fois plus grande pour la capacitance surfacique.

### RÉFÉRENCES

**[1]** Demande de brevet CN 103346021 au nom de Aluminium Corporation of China Ltd publiée le 9 octobre 2013.
**[2]** Li et al, 2015, « Vertically aligned carbon nanotube@MnO2 nanosheet arrays grown on carbon cloth for high performance flexible electrodes of supercapacitors », RSC Adv., vol. 5, pages 77473-77442.
**[3]** Lou et al, 2013, « Facile synthesis of manganèse oxide/aligned carbon nanotubes over aluminium foil as 3D binder free cathodes for lithium ion batteries », J. Mater. Chem. A, vol. 1, pages 3757-3767.
**[4]** Ma et al, 2007, « Synthesis and characterization of manganèse dioxide spontaneously coated on carbon nanotubes », Carbon, vol. 45, pages 375-382.
**[5]** Zhang et al, 2009, « Fabrication of a vertically aligned carbon nanotube electrode and its modification by nanotructured MnO2 for supercapacitors », Pure & Applied Chemistry, vol. 81, pages 2317-2325.
**[6]** Pinault et al, 2005, « Growth of multiwalled carbon nanotubes during the initial stages of aerosol-assisted CCVD », Carbon, vol. 43, pages 2968-2976.
**[7]** Pinault et al, 2005, « Evidence of sequential lift in growth of aligned multi-walled carbon nanotube multilayers », Nano Lett., vol. 5, pages 2394-2398.
**[8]** Demande internationale WO 2015/071408 au nom du CEA publiée le 21 mai 2015.
**[9]** Dorfler et al, 2013, « High power supercap électrodes based on vertically aligned carbon nanotubes on aluminum », J. of Power Sources, vol. 227, pages 218-228.
**[10]** Liatard et al, 2015, « Vertically aligned carbon nanotubes on aluminum as a light-weight positive electrode for lithium-polysulfide batteries », Chemical Communications, vol. 51, pages 7749-7752.
**[11]** Arcila-Velez et al, 2014, « Roll-to-roll synthesis of vertically aligned carbon nanotube electrodes for electrical double layer capacitors », Nano Energy, vol. 8, pages 9-16.
**[12]** Demande internationale WO 2009/103925 au nom du CEA publiée le 27 aout 2009.

## Revendications

1. Procédé pour la préparation d'une électrode comprenant un support métallique, des nanotubes de carbone verticalement alignés et un oxyde métallique déposé sur toute la longueur desdits nanotubes de carbone verticalement alignés, ledit procédé comprenant les étapes successives suivantes :
a) synthétiser, sur un support métallique, un tapis de nanotubes de carbone verticalement alignés dont la densité est comprise entre 10⁸ et 10¹³ nanotubes.cm⁻² de support ;
b) mettre en contact ledit tapis de nanotubes de carbone verticalement alignés synthétisés sur le support métallique lors de l'étape (a), avec une solution aqueuse comprenant un précurseur dudit oxyde métallique dont le potentiel redox est supérieur au potentiel relatif du tapis de nanotubes de carbone verticalement alignés synthétisés sur le support métallique,
ladite solution aqueuse comprenant le précurseur de l'oxyde métallique consistant en ledit précurseur dilué ou solubilisé dans de l'eau, aucun autre composé chimique différent dudit précurseur n'étant présent dans la solution mise en oeuvre lors de ladite étape (b),
la mise en contact étant exclusivement réalisée à une température inférieure ou égale à 40°C,
moyennant quoi une matrice en oxyde métallique est déposée sur toute la longueur desdits nanotubes de carbone verticalement alignés.

2. Procédé selon la revendication 1, **caractérisé en ce que** ledit support métallique est un support en un matériau à base de titane, de nickel, d'aluminium, de cuivre, de chrome, de tantale, de platine, d'or, d'argent, d'acier inoxydable, de silicium ou de carbone.

3. Procédé selon la revendication 1 ou 2, **caractérisé en ce que**, suite à ladite étape (a) et préalablement à ladite étape (b), les nanotubes de carbone verticalement alignés peuvent être soumis à un traitement oxydant.

4. Procédé selon l'une quelconque des revendications 1 à 3, **caractérisé en ce que** ledit oxyde métallique est un oxyde d'au moins un métal de transition.

5. Procédé selon l'une quelconque des revendications 1 à 4, **caractérisé en ce que** ledit oxyde métallique est choisi dans le groupe constitué par un oxyde de ruthénium (RuO₂ ou RuO₄), un oxyde de titane (TiO₂), un oxyde de manganèse (MnO, Mn₃O₄, Mn₂O₃ ou MnO₂), un oxyde de cuivre (Cu₂O), un oxyde de nickel (NiO₂ ou Ni₂O₃), un oxyde de cobalt (Co₂O₃ ou Co₃O₄), un oxyde de fer (Fe₂O₃ ou Fe₃O₄), un oxyde de chrome (CrO₂, CrO₃ ou Cr₂O₃), un oxyde de vanadium (VO₂, V₂O₃ ou V₂O₅), et un de leurs mélanges.

6. Procédé selon l'une quelconque des revendications 1 à 5, **caractérisé en ce que** ledit précurseur dudit oxyde métallique est choisi dans le groupe constitué par un sel de perruthenate comme du perruthenate de sodium ou du perruthenate de potassium ; un sel de pertitanate comme du pertitanate de sodium ou du pertitanate de potassium ; un sel de permanganate comme du permanganate de sodium ou du permanganate de potassium ; un sel de perferrate comme du perferrate de sodium ou du perferrate de potassium ; un sel de perchromate comme du perchromate de sodium ou du perchromate de potassium ; un sel de pervanadate comme du pervanadate de sodium ou du pervanadate de potassium ; ou un de leurs mélanges.

7. Procédé selon l'une quelconque des revendications 1 à 6, **caractérisé en ce que** ledit précurseur dudit oxyde métallique est présent dans ladite solution aqueuse en une quantité comprise entre 1 mM à 500 mM, notamment entre 2 mM et 100 mM, en particulier, entre 4 mM et 50 mM et, plus particulièrement, de l'ordre de 10 mM (i.e. 10 mM ± 5 mM).

8. Procédé selon l'une quelconque des revendications 1 à 7, **caractérisé en ce que**, suite à ladite étape (b), ledit procédé présente une étape de rinçage et éventuellement une étape de séchage.

9. Electrode préparée par un procédé tel que défini à l'une quelconque des revendications 1 à 8, **caractérisée en ce que** la densité desdits nanotubes de carbone verticalement alignés est comprise entre de l'ordre de 10¹¹ à 10¹² nanotubes.cm⁻².

10. Utilisation d'une électrode selon la revendication 9, comme électrode positive/négative d'un dispositif de stockage et de restitution de l'électricité tel qu'un supercondensateur ou une batterie, comme électrode pour dispositif photovoltaïque, dans les matériaux pour le stockage du CO₂ ou comme électrode pour capteurs électrochimiques.

## Patentansprüche

1. Verfahren zum Herstellen einer Elektrode, die ein Metallsubstrat, vertikal ausgerichtete Kohlenstoff-Nanoröhren und ein über die gesamte Länge der vertikal ausgerichteten Kohlenstoff-Nanoröhren abgeschiedenes Metalloxid umfasst, wobei das Verfahren die folgenden aufeinanderfolgenden Schritte umfasst:
a) Synthetisieren, auf einem Metallsubstrat, einer Matte aus vertikal ausgerichteten Kohlenstoff-Nanoröhren, deren Dichte zwischen 10⁸ und 10¹³ Nanoröhren pro cm⁻² Substrat liegt;
b) Inkontaktbringen der Matte aus vertikal ausgerichteten Kohlenstoff-Nanoröhren, die bei Schritt (a) auf dem Metallsubstrat synthetisiert wurden, mit einer wässrigen Lösung, die einen Vorläufer des Metalloxids umfasst, dessen Redoxpotential größer ist als das relative Potential der Matte aus vertikal ausgerichteten Kohlenstoff-Nanoröhren, die auf dem Metallsubstrat synthetisiert werden,
wobei die wässrige Lösung den Vorläufer des Metalloxids umfasst, das aus dem in Wasser verdünnten oder solubilisierten Vorläufer besteht, wobei keine andere chemische Verbindung als der Vorläufer in der bei Schritt (b) umgesetzten Lösung vorhanden ist,
wobei das Inkontaktbringen ausschließlich bei einer Temperatur von kleiner gleich 40°C erfolgt,
wodurch eine Metalloxidmatrix über die gesamte Länge der vertikal ausgerichteten Kohlenstoff-Nanoröhren abgeschieden wird.

2. Verfahren nach Anspruch 1, **dadurch gekennzeichnet, dass** das Metallsubstrat ein Substrat aus einem Material auf Basis von Titan, Nickel, Aluminium, Kupfer, Chrom, Tantal, Platin, Gold, Silber, Edelstahl, Silizium oder Kohlenstoff ist.

3. Verfahren nach Anspruch 1 oder 2, **dadurch gekennzeichnet, dass** nach dem Schritt (a) und vor dem Schritt (b) die vertikal ausgerichteten Kohlenstoff-Nanoröhren einer Oxidationsbehandlung unterzogen werden können.

4. Verfahren nach einem der Ansprüche 1 bis 3, **dadurch gekennzeichnet, dass** das Metalloxid ein Oxid mindestens eines Übergangsmetalls ist.

5. Verfahren nach einem der Ansprüche 1 bis 4, **dadurch gekennzeichnet, dass** das Metalloxid aus der Gruppe ausgewählt wird, die aus einem Rutheniumoxid (RuO₂ oder RuO₄), einem Titanoxid (TiO₂), einem Manganoxid (MnO, Mn₃O₄, Mn₂O₃ oder MnO₂), einem Kupferoxid (Cu₂O), einem Nickeloxid (NiO₂ oder Ni₂O₃), einem Kobaltoxid (Co₂O₃ oder Co₃O₄), einem Eisenoxid (Fe₂O₃ oder Fe₃O₄), einem Chromoxid (CrO₂, CrO₃ oder Cr₂O₃), einem Vanadiumoxid (VO₂, V₂O₃ oder V₂O₅) und einer ihrer Mischungen besteht.

6. Verfahren nach einem der Ansprüche 1 bis 5, **dadurch gekennzeichnet, dass** der Vorläufer des Metalloxids aus der Gruppe ausgewählt wird, die aus einem Perruthenatsalz wie Natriumperruthenat oder Kaliumperruthenat; einem Pertitanatsalz wie Natriumpertitanat oder Kaliumpertitanat; einem Permanganatsalz wie Natriumpermanganat oder Kaliumpermanganat; einem Perferratsalz wie Natriumperferrat oder Kaliumperferrat; einem Perchromatsalz wie Natriumperchromat oder Kaliumperchromat; einem Pervanadatsalz wie Natriumpervanadat oder Kaliumpervanadat; oder einer ihrer Mischungen besteht.

7. Verfahren nach einem der Ansprüche 1 bis 6, **dadurch gekennzeichnet, dass** der Vorläufer des Metalloxids in der wässrigen Lösung in einer Menge zwischen 1 mM und 500 mM, insbesondere zwischen 2 mM und 100 mM, vor allem zwischen 4 mM und 50 mM und ganz besonders im Bereich von 10 mM (d. h. 10 mM ± 5 mM) vorhanden ist.

8. Verfahren nach einem der Ansprüche 1 bis 7, **dadurch gekennzeichnet, dass** das Verfahren nach dem Schritt (b) einen Schritt des Spülens und gegebenenfalls einen Schritt des Trocknens aufweist.

9. Elektrode, die durch ein wie in einem der Ansprüche 1 bis 8 definiertes Verfahren hergestellt wird, **dadurch gekennzeichnet, dass** die Dichte der vertikal ausgerichteten Kohlenstoff-Nanoröhren im Bereich von 10¹¹ bis 10¹² Nanoröhren pro cm⁻² liegt.

10. Verwendung einer Elektrode nach Anspruch 9 als positive/negative Elektrode für eine Vorrichtung zum Speichern und Abgeben von Elektrizität, wie etwa ein Superkondensator oder eine Batterie, als Elektrode für eine Photovoltaikvorrichtung, in den Materialien für die CO₂-Speicherung oder als Elektrode für elektrochemische Sensoren.

## Claims

1. Method for preparing an electrode comprising a metal support, vertically aligned carbon nanotubes and a metal oxide deposited along the entire length of said vertically aligned carbon nanotubes, said method comprising the following consecutive steps:
a) synthesizing, on a metal support, a mat of vertically aligned carbon nanotubes, the density of which is comprised between 10⁸ and 10¹³ nanotubes. cm⁻² of support;
b) bringing said mat of vertically aligned carbon nanotubes synthesized on the metal support in step (a) into contact with an aqueous solution comprising a precursor of said metal oxide, the redox potential of which is greater than the relative potential of the mat of vertically aligned carbon nanotubes synthesized on the metal support,
said aqueous solution comprising the metal oxide precursor consisting of said precursor diluted or solubilized in water, no other chemical compound different from said precursor being present in the solution used in step (b), the step of bringing into contact being exclusively carried out at a temperature of less than or equal to 40°C,
whereby a metal oxide matrix is deposited along the entire length of said vertically aligned carbon nanotubes.

2. Method according to claim 1, **characterized in that** said metal support is a support made of a material based on titanium, nickel, aluminium, copper, chromium, tantalum, platinum, gold, silver, stainless steel, silicon or carbon.

3. Method according to claim 1 or 2, **characterized in that**, following step (a) and prior to step (b), the vertically aligned carbon nanotubes can be subjected to oxidative treatment.

4. Method according to any one of claims 1 to 3, **characterized in that** said metal oxide is an oxide of at least one transition metal.

5. Method according to any one of claims 1 to 4, **characterized in that** said metal oxide is chosen in the group consisting of a ruthenium oxide (RuO₂ or RuO₄), a titanium oxide (TiO₂), a manganese oxide (MnO, Mn₃O₄, Mn₂O₃ or MnO₂), a copper oxide (Cu₂O), a nickel oxide (NiO₂ or Ni₂O₃), a cobalt oxide (Co₂O₃ or Co₃O₄), an iron oxide (Fe₂O₃ or Fe₃O₄), a chromium oxide (CrO₂, CrO₃ or Cr₂O₃), a vanadium oxide (VO₂, V₂O₃ or V₂O₅), and a mixture thereof.

6. Method according to any one of claims 1 to 5, **characterized in that** said precursor of said metal oxide is chosen in the group consisting of a perruthenate salt such as sodium perruthenate or potassium perruthenate; a pertitanate salt such as sodium pertitanate or potassium pertitanate; a permanganate salt such as sodium permanganate or potassium permanganate; a perferrate salt such as sodium perferrate or potassium perferrate; a perchromate salt such as sodium perchromate or potassium perchromate; a pervanadate salt such as sodium pervanadate or potassium pervanadate; or a mixture thereof.

7. Method according to any one of claims 1 to 6, **characterized in that** said precursor of said metal oxide is present in said aqueous solution in a quantity comprised between 1 mM and 500 mM, in particular between 2 mM and 100 mM, in particular between 4 mM and 50 mM and, more particularly, in the order of 10 mM (i.e. 10 mM ± 5 mM).

8. Method according to any one of claims 1 to 7, **characterized in that**, following step (b), said method has a rinsing step and possibly a drying step.

9. Electrode prepared by a method as defined in any one of claims 1 to 8, **characterized in that** the density of said vertically aligned carbon nanotubes is of the order of 10¹¹ to 10¹² nanotubes/cm⁻².

10. Use of an electrode according to claim 9, as a positive/negative electrode in an electricity storage and release device such as a supercapacitor or a battery, as an electrode for a photovoltaic device, in CO₂ storage materials or as an electrode for electrochemical sensors.
